# EUROPÄISCHE PATENTSCHRIFT

(11) **EP 3 960 425 B1**
(45) Veröffentlichungstag und Bekanntmachung des Hinweises auf die Patenterteilung: **10.01.2024**
(21) Anmeldenummer: 21185536.6
(22) Anmeldetag: 14.07.2021
(51) Int. Cl.: B29C 49/42, B29C 49/64, B29C 49/46, B29C 49/06, B29K 67/00, B29L 31/00

(54) **VORRICHTUNG UND VERFAHREN ZUM ERWÄRMEN VON KUNSTSTOFFVORFORMLINGEN MIT AUSBLASEINRICHTUNG**
METHOD AND DEVICE FOR HEATING PLASTIC PRE-FORMS WITH BLOWING DEVICE
DISPOSITIF ET PROCÉDÉ DE CHAUFFAGE DE PRÉFORMES EN MATIÈRE PLASTIQUE POURVU DE DISPOSITIF DE SOUFFLAGE

(30) Priorität: 27.08.2020 DE 102020122472
(43) Veröffentlichungstag der Anmeldung: 02.03.2022
(73) Patentinhaber: KRONES AG, 93073 Neutraubling (DE)
(72) Erfinder: Geltinger, Florian, 93073 Neutraubling (DE); Kindl, Norbert, 93073 Neutraubling (DE)
(74) Vertreter: Hannke Bittner & Partner mbB Regensburg

(56) Entgegenhaltungen:
- EP-A1- 2 746 029
- EP-A1- 3 549 744
- EP-A2- 2 096 055
- DE-A1- 10 140 906
- DE-A1-102014 012 528
- DE-A1-102017 114 766
- US-A1- 2016 193 775

## Beschreibung

Die vorliegende Erfindung bezieht sich auf ein Verfahren zum Herstellen von Kunststoffbehältnissen. Dabei ist es aus dem Stand der Technik seit langem bekannt, zunächst sogenannte Kunststoffvorformlinge zu erwärmen und diese anschließend mittels einer Umformungsstation, wie etwa einer Streckblasmaschine, zu den Behältnissen umzuformen.

Dabei werden beispielsweise diese Kunststoffvorformlinge zunächst durch einen Ofen gefahren und in diesem auf eine Temperatur erwärmt, welche einen Streckblasvorgang ermöglicht. Auch ist es aus dem Stand der Technik bekannt, die Kunststoffvorformlinge vor oder nach ihrer Erwärmung zu behandeln, beispielsweise mit steriler oder ionisierter Luft auszublasen. Dies ist beispielsweise in den folgenden deutschen und europäischen Offenlegungsschriften DE 10 2017 114766 A1, EP 2 746 029 A1, DE 101 40 906 A1, EP 2 096 055 A2, EP 3 549 744 A1 und DE 10 2014 012528 A1 beschrieben. Zu diesem Zweck sind im Stand der Technik üblicherweise entweder vor oder nach dem Ofen entsprechende Ausblassterne vorgesehen, welche die Kunststoffvorformlinge ausblasen bzw. mit Luft beaufschlagen. Dies beschreibt beispielsweise die US-amerikanische Druckschrift US 2016/193775 A1. Diese Vorgehensweise erfordert jedoch einen erhöhten Bauraumaufwand. Daneben sind zum Teil weitere Transportsterne und Bearbeitungseinheiten vorgesehen, was auch weitere Übergabemechanismen für die Kunststoffvorformlinge erfordert.

Der vorliegenden Erfindung liegt daher die Aufgabe zugrunde, eine Vorrichtung und ein Verfahren zur Verfügung zu stellen, mit denen der Bauraum für entsprechende Anlagen reduziert werden kann. Dies wird erfindungsgemäß durch die Gegenstände der unabhängigen Patentansprüche erreicht. Vorteilhafte Ausführungsformen und Beispiele sind Gegenstand der Unteransprüche.

Eine erfindungsgemäße Vorrichtung zum Erwärmen von Kunststoffvorformlingen weist eine Transporteinrichtung auf, welche die Kunststoffvorformlinge während ihrer Erwärmung entlang eines vorgegebenen Transportpfads transportiert, wobei diese Transporteinrichtung eine Vielzahl von Halteeinrichtungen zum Halten der Kunststoffvorformlinge während ihres Transports aufweist. Weiterhin weist die Vorrichtung eine Zuführtransporteinrichtung auf, welche der Transporteinrichtung in einem Übergabebereich die Kunststoffvorformlinge direkt übergibt, wobei diese Zuführtransporteinrichtung einen bezüglich einer Drehachse drehbaren Träger aufweist, an dem eine Vielzahl von Halteeinrichtungen, welche die Kunststoffvorformlinge halten, angeordnet ist.

Erfindungsgemäß ist jeder dieser Halteeinrichtungen jeweils eine Beaufschlagungseinrichtung zugeordnet, welche die Kunststoffvorformlinge durch deren Mündungen mit einem fließfähigen, insbesondere gasförmigen Medium beaufschlagen, wobei diese Beaufschlagungseinrichtungen an einem um die Drehachse drehbaren Träger angeordnet sind.

Es wird also im Rahmen der Erfindung vorgeschlagen, dass diejenige Transporteinrichtung, die hier als Zuführtransporteinrichtung bezeichnet wird und die üblicherweise bei derartigen Anlagen vorhanden ist, auch verwendet wird, um die Kunststoffvorformlinge mit einem fließfähigen Medium zu beaufschlagen. Auf diese Weise können weitere Übergaben und Transportsterne vermieden werden.

Unter Halteeinrichtungen der Zuführtransporteinrichtungen werden solche Halteeinrichtungen verstanden, die entweder alleine oder im Zusammenspiel mit anderen Elementen, etwa mit einem Führungsbogen geeignet und bestimmt sind, die Kunststoffvorformlinge zu halten und/oder zu stützen. Bevorzugt kontaktieren die Halteeinrichtungen wenigstens einen Bereich der zu haltenden Kunststoffvorformlinge, etwa einen Bereich unterhalb eines Tragrings der Kunststoffvorformlinge.

Die beschriebene Transporteinrichtung der Erwärmungseinrichtung transportiert die Kunststoffvorformlinge vorzugsweise vereinzelt, wobei die hier beschriebenen Halteeinrichtungen vorgesehen sind. Die Zuführtransporteinrichtung ist bevorzugt diejenige Transporteinrichtung, welche gleichzeitig auch eine Vereinzelung der Kunststoffvorformlinge bewirkt.

Bevorzugt ist daher die Zuführtransporteinrichtung eine Vereinzelungseinrichtung und/oder ein sogenannter Eintaktstern, der auch dazu dient, in Reihe zugeführte Kunststoffvorformlinge zu vereinzeln bzw. einzelnen Halteeinrichtungen zuzuordnen.

Vorteilhaft weist die hier beschriebene Vorrichtung eine der Erwärmungseinrichtung nachgeordnete Vorrichtung zum Umformen von Kunststoffvorformlingen zu Kunststoffbehältnissen, insbesondere eine Streckblasmaschine, auf.

Bei einer bevorzugten Ausführungsform handelt es sich bei der Erwärmungseinrichtung um einen Infrarotofen, der eine Vielzahl von stationär angeordneten Erwärmungseinrichtungen aufweist, die entlang des Transportpfads der Kunststoffvorformlinge angeordnet sind. Daneben wäre jedoch als Erwärmungseinrichtung auch eine andere Gattung Ofen denkbar, wie beispielsweise ein Mikrowellenofen, innerhalb dessen die Kunststoffvorformlinge erwärmt werden.

Vorteilhaft handelt es sich bei den Halteeinrichtungen des Ofens um in die Mündungen der Kunststoffvorformlinge eingreifende Haltedorne. Insbesondere sind dabei diese Dorne bezüglich einer Längsrichtung der Kunststoffvorformlinge drehbar, wobei durch diese Drehung der Kunststoffvorformlinge eine gleichmäßigere Erwärmung der Kunststoffvorformlinge erreicht wird.

Bei dem oben beschriebenen fließfähigen Medium kann es sich um ein flüssiges, gasförmiges, aerosolförmiges oder dampfförmiges Medium handeln. Insbesondere handelt es sich bei dem fließfähigen Medium um Luft und besonders bevorzugt um ionisierte Luft und/oder Sterilluft.

Bevorzugt weist die Vorrichtung wenigstens eine lonisierungseinrichtung zum Ionisieren der den Kunststoffvorformlingen zugeführten Luft auf.

Unter einer direkten Übergabe wird verstanden, dass sich die Transporteinrichtung des Ofens direkt an die Zuführtransporteinrichtung anschließt und die Kunststoffvorformlinge insbesondere unmittelbar von der Zuführtransporteinrichtung an die Transporteinrichtung übergeben werden.

Bevorzugt sind der Träger, an dem die Halteeinrichtungen für die Kunststoffvorformlinge angeordnet sind und der Träger, an dem die Beaufschlagungseinrichtungen angeordnet sind, zueinander parallel angeordnet. Es wäre jedoch auch denkbar, dass nur ein kreisförmiger Träger vorhanden ist, der einerseits die Halteeinrichtungen für die Kunststoffvorformlinge aufweist und an dem andererseits auch die Beaufschlagungseinrichtungen angeordnet sind.

Bei einer bevorzugten Ausführungsform weisen die Beaufschlagungseinrichtungen Düsen auf oder sind Düsen. Bevorzugt sind die Drehachsen der beiden Träger die gleichen. Daneben wäre es auch denkbar, dass an einen Träger sowohl die Halteeinrichtungen als auch die Beaufschlagungseinrichtungen angeordnet sind.

Bei einer bevorzugten Ausführungsform sind die Beaufschlagungseinrichtungen oberhalb der Kunststoffvorformlinge angeordnet. Insbesondere sind die Beaufschlagungseinrichtungen oberhalb der Mündungen der Kunststoffvorformlinge angeordnet. Dabei ist bevorzugt die Zuführtransporteinrichtung dazu geeignet und bestimmt, die Kunststoffvorformlinge über deren Mündungen zu beaufschlagen.

Bei einer weiteren bevorzugten Ausführungsform weist die Vorrichtung ein Reservoir zum Speichern des fließfähigen bzw. gasförmigen Mediums und/oder eine Erzeugungseinrichtung zum Erzeugen des fließförmigen bzw. gasförmigen Mediums auf. Bevorzugt ist dieses Reservoir stationär angeordnet. So kann beispielsweise ein Ringluftkanal vorgesehen sein.

Bei einer bevorzugten Ausführungsform weist die Vorrichtung eine Verteileinrichtung zum Verteilen des gasförmigen Mediums von diesem Reservoir auf diesen einzelnen Beaufschlagungseinrichtungen auf. Zu diesem Zweck kann beispielsweise ein sogenannter Drehverteiler eingesetzt werden.

Bei einer bevorzugten Ausführungsform weist die Vorrichtung auch eine Druckerzeugniseinrichtung wie etwa einen Kompressor auf, um das gasförmige Medium unter einem Überdruck zur Verfügung zu stellen.

Bei einer weiteren bevorzugten Ausführungsform sind die Beaufschlagungseinrichtungen relativ zu den diesen Beaufschlagungseinrichtungen zugeordneten Kunststoffvorformlingen in einer Richtung bewegbar, welche eine Komponente in der radialen Richtung des drehbaren Trägers aufweist. An dieser Stelle ist darauf hinzuweisen, dass die Beaufschlagungseinrichtungen und die Halteeinrichtungen der Transporteinrichtung beide im Prinzip in den Kunststoffvorformling eingreifen, bzw. in diesen eingeführt werden. Aus diesem Grunde sollte vermieden werden, dass die Beaufschlagungseinrichtungen mit den Halteeinrichtungen kollidieren.

Es wäre auch denkbar, dass die Beaufschlagungseinrichtungen relativ zu den diesen zugeordneten Kunststoffvorformlingen in einer Längsrichtung der Kunststoffvorformlinge soweit bewegbar sind, dass sie aus einem Kollisionsbereich mit den Halteeinrichtungen der Transporteinrichtungen herausgeführt werden.

Bei einer bevorzugten Ausführungsform ist jedem Kunststoffvorformling eine Beaufschlagungseinrichtung zugeordnet. Insbesondere soll eine Kollision der Halteeinrichtungen mit den Beaufschlagungseinrichtungen insbesondere in dem oben erwähnten Übergabebereich der Kunststoffvorformlinge vermieden werden. Dabei wäre es denkbar, dass die Beaufschlagungseinrichtungen in der besagten radialen Richtung bewegt werden, es wäre jedoch auch eine Bewegung der Kunststoffvorformlinge in der radialen Richtung denkbar.

Daneben wäre auch eine kombinierte Bewegung sowohl der Beaufschlagungseinrichtungen als auch der Kunststoffvorformlinge denkbar. Daneben wäre es auch denkbar, dass in einem Übergabebereich auch die Halteeinrichtungen der Transporteinrichtung beweglich sind, beispielsweise zurückgestellt werden, um eine Kollision mit den Beaufschlagungseinrichtungen zu vermeiden. Bevorzugt handelt es sich bei der Bewegung der Beaufschlagungseinrichtungen um eine radiale Bewegung in einer radialen Richtung des drehbaren Trägers der Zuführtransporteinrichtung.

Bei einer weiteren bevorzugten Ausführungsform sind die Beaufschlagungseinrichtungen relativ zu den diesen Beaufschlagungseinrichtungen zugeordneten Kunststoffvorformlingen gegenüber dem Träger beweglich. Bei dieser speziellen Ausgestaltung werden also die Beaufschlagungseinrichtungen bewegt und dabei bevorzugt insbesondere bezüglich des drehbaren Trägers nach innen bewegt. Zu diesem Zweck können an dem Träger radial verlaufende Nuten angeordnet sein, innerhalb derer die Beaufschlagungseinrichtungen bewegbar sind. Dabei wäre es möglich, dass an einer bestimmten Position der Beaufschlagungseinrichtungen diese zurückgezogen werden.

Bevorzugt sind dabei einzelne Beaufschlagungseinrichtungen oder auch Gruppen von Beaufschlagungseinrichtungen, insbesondere solche, die hintereinander angeordnet sind, gemeinsam bewegbar.

Bei einer weiteren bevorzugten Ausführungsform sind die Beaufschlagungseinrichtungen relativ zu den diesen Beaufschlagungseinrichtungen zugeordneten Kunststoffvorformlingen in dem Übergabebereich in Richtung der Drehachse bewegbar. Dies bedeutet, dass die Beaufschlagungseinrichtungen speziell im Übergabebereich, insbesondere radial nach innen zurückgezogen werden. Auf diese Weise kann eine Kollision mit den Halteeinrichtungen bzw. den Haltedornen der nachfolgenden Transporteinrichtung vorgenommen werden.

Bei einer weiteren bevorzugten Ausführungsform weist die Vorrichtung eine Antriebseinrichtung auf, welche die Bewegungen der Beaufschlagungseinrichtungen gegenüber dem Träger bewirkt. So kann insbesondere eine Führungskurve vorgesehen sein, welche ein Zurückziehen der einzelnen Beaufschlagungseinrichtungen, insbesondere in dem Übergabebereich bewirkt.

Dabei kann es sich insbesondere um eine sogenannte Führungskurve handeln, welche in diesem Bereich die Beaufschlagungseinrichtungen zurückzieht und gegebenenfalls auch wieder in ihre Ausgangsposition stellt. Es wäre jedoch auch möglich, dass Antriebseinrichtungen vorgesehen sind, welche diese Bewegungen bewirken, wie beispielsweise pneumatische Antriebe, hydraulische Antriebe oder elektromotorische Antriebe.

Bei einer weiteren bevorzugten Ausführungsform sind die Beaufschlagungseinrichtungen in einer Längsrichtung der Kunststoffvorformlinge gegenüber den Kunststoffvorformlingen bewegbar. Auf diese Weise können die Beaufschlagungseinrichtungen in die Mündungen der Kunststoffvorformlinge eingeführt werden, um diese leichter zu beaufschlagen, beispielsweise auszublasen.

Auf diese Weise ist ein Beaufschlagen der Kunststoffvorformlinge mit beispielsweise ionisierter Luft, mit Sterilluft oder dergleichen leichter möglich. Auch wäre es denkbar, dass die Vorrichtung eine Hubkurve aufweist, welche die Beaufschlagungseinrichtungen in die Kunststoffvorformlinge einführt. Bevorzugt sind hier jedoch einzelne Antriebe vorgesehen, welche die einzelnen Beaufschlagungseinrichtungen in die Kunststoffvorformlinge einführen. Auf diese Weise kann unterschiedlichen Längen an Kunststoffvorformlingen leichter Rechnung getragen werden und es ist eine Umstellung leichter möglich.

Bevorzugt ist daher wenigstens eine Antriebseinrichtung und bevorzugt eine Vielzahl von Antriebseinrichtungen vorgesehen, um die Beaufschlagungseinrichtungen gegenüber den Kunststoffvorformlingen in deren Längsrichtungen zu bewegen. Bei diesen einzelnen Antrieben kann es sich insbesondere, aber nicht ausschließlich, um pneumatische, elektrische oder hydraulische Antriebe handeln.

Bei einer weiteren bevorzugten Ausführungsform sind die Halteeinrichtungen der Zuführtransporteinrichtung an einem Außenumfang des Trägers angeordnete Ausnehmungen. In diesen Ausnehmungen liegen beispielsweise Umfangsbereiche der Kunststoffvorformlinge an und insbesondere werden Tragringe der Kunststoffvorformlinge in diesen Ausnehmungen abgestützt.

Weiterhin ist eine Kurve und/oder ein Führungsbogen vorgesehen, welcher die Kunststoffvorformlinge von der gegenüberliegenden Seite hier stützt. Damit werden bevorzugt die Kunststoffvorformlinge von der Zuführtransporteinrichtung vereinzelt geführt.

Bevorzugt handelt es sich bei der Zuführtransporteinrichtung um einen sogenannten Eintaktstern. Dieser bringt die einzelnen Kunststoffvorformlinge, die beispielsweise von einer Zuführschiene zugeführt werden, in eine Vereinzelung. Bevorzugt ist daher stromaufwärts der Zuführtransporteinrichtung eine weitere Transporteinrichtung vorgesehen, welche die Kunststoffvorformlinge jedoch nicht vereinzelt, sondern Stück an Stück fördert. Dabei kann es sich beispielsweise um eine Zuführschiene handeln.

Bei einer weiteren bevorzugten Ausführungsformt weist die Vorrichtung eine Zuführsperre auf, welche bei Bedarf die Zufuhr der Kunststoffvorformlinge in Zuführtransporteinrichtung sperren kann.

Bei einer weiteren bevorzugten Ausführungsform ist daher der Zuführtransporteinrichtung oder der Transporteinrichtung eine weitere Transporteinrichtung zum Transportieren der Kunststoffvorformlinge vorangeordnet, welche die Kunststoffvorformlinge an die Zuführtransporteinrichtung übergibt und welche die Kunststoffvorformlinge in einer Reihe transportiert.

Damit werden hier die Kunststoffvorformlinge bevorzugt unmittelbar aneinander liegend geführt. Vor dieser weiteren Transporteinrichtung kann eine Sortiereinrichtung vorgesehen sein, welche die Kunststoffvorformlinge sortiert bzw. ausrichtet. Dabei kann es sich beispielsweise um einen Rollensortierer handeln. Bei einer weiteren bevorzugten Ausführungsform übernimmt die Zuführtransporteinrichtung die Kunststoffvorformlinge direkt von der weiteren Transporteinrichtung.

Bei einer weiteren bevorzugten Ausführungsform weist die Zuführtransporteinrichtung einen Führungsbogen auf, der insbesondere radial außerhalb des drehbaren Trägers angeordnet ist, wobei die Kunststoffvorformlinge zwischen den Halteeinrichtungen eines drehbaren Trägers und diesen Führungsbogen geführt werden. Vorteilhaft ist dieser Führungsbogen stationär angeordnet. Dieser Führungsbogen weist bevorzugt ein kreissegmentförmiges Profil auf.

Bevorzugt ist dabei dieser Führungsbogen an einem Träger fixiert. Dabei ist besonders bevorzugt dieser Führungsbogen bzw. diese Führungsgarnitur mittels Betätigungs- bzw. Befestigungseinrichtungen an einem Träger befestigt, wobei diese Betätigungs- und/oder Befestigungseinrichtungen besonders bevorzugt elektrisch, manuell oder pneumatisch oder hydraulisch gelöst und/oder arretiert werden können.

Aufgrund der Größe der Zuführtransporteinrichtung und der schlechten Zugänglichkeit, kann es schwierig sein, den besagten Führungsbogen mittels Schrauben und im Stand der Technik bekannten Befestigungsmitteln zu lösen. In einem Aspekt der Erfindung wird daher vorgeschlagen, dass dieser Führungsbogen durch pneumatische Befestigungseinrichtungen und insbesondere Pneumatikspanner befestigt wird. Bevorzugt wirken dabei diese Befestigungseinrichtungen mittels Federkraft, sodass in einem unbelasteten Zustand ein befestigter Zustand vorliegt. Durch Beaufschlagung beispielsweise mit Druckluft oder mit einem Hydraulikmedium kann diese Federkraft überwunden werden und die Spanneinrichtungen können gelöst werden.

Die vorliegende Erfindung ist daher weiterhin auf eine Zuführtransporteinrichtung zum Zuführen von Kunststoffvorformlingen an eine Vorrichtung zum Erwärmen der Kunststoffvorformlinge und insbesondere eine Vorrichtung der oben beschriebenen Art gerichtet, wobei die Zuführtransporteinrichtung einen bezüglich einer Drehachse drehbaren Träger aufweist und eine Vielzahl von Halteeinrichtungen, welche die Kunststoffvorformlinge halten, wobei diese Halteeinrichtungen an einem Außenumfang des Trägers ausgebildete Ausnehmungen aufweisen und wobei die Zuführtransporteinrichtung einen radial außerhalb des drehbaren Trägers angeordneten Führungsbogen aufweist, wobei die Kunststoffvorformlinge zwischen diesem Führungsbogen und dem Träger aufnehmbar sind und wobei dieser Führungsbogen und/oder dieser Träger mit mindestens einer und bevorzugt einer Vielzahl von Befestigungseinrichtungen lösbar an einem Träger befestigt ist.

Erfindungsgemäß sind diese Befestigungseinrichtungen durch Antriebseinrichtungen und insbesondere individuelle Antriebseinrichtungen lösbar und/oder feststellbar.

Bei dieser Ausgestaltung wird vorgeschlagen, dass der entsprechende Führungsbogen, der insbesondere im Rahmen eines Formatwechsels gewechselt werden kann, durch einen und insbesondere einen zentralen Antrieb gesteuert werden kann, sodass ohne zusätzliche Werkzeuge ein Austausch dieser Führungsbögen möglich ist.

Bevorzugt sind diese Antriebseinrichtungen aus einer Gruppe von Antriebseinrichtungen ausgewählt, welche pneumatische, hydraulische und elektrische Antriebseinrichtungen enthält. Besonders bevorzugt sind diese Befestigungseinrichtung durch einen pneumatischen Antrieb lösbar.

Bei einer weiteren bevorzugten Ausführungsform weisen diese Befestigungseinrichtungen Federelemente auf, welche die Befestigungseinrichtungen in einem befestigten Zustand halten. Dieser durch die Feder verursachte Halt kann insbesondere durch beispielsweise ein Pneumatikmittel aufgehoben werden.

Bei einer weiteren bevorzugten Ausführungsform ist der Führungsbogen segmentiert aufgebaut. So kann er beispielsweise zwei kreissegmentförmige Elemente aufweisen oder dergleichen.

Bei einer weiteren bevorzugten Ausführungsform ist jeder der Halteeinrichtungen eine Beaufschlagungseinrichtung zugeordnet, insbesondere eine solche, welche die Kunststoffvorformlinge durch deren Mündungen mit einem fließfähigen und insbesondere gasförmigen Medium (und insbesondere mit ionisierter Luft) beaufschlagen, wobei besonders bevorzugt diese Beaufschlagungseinrichtung ebenfalls, wie oben beschrieben, an einem um die Drehachse drehbaren Träger angeordnet sind.

Die hier beschriebene Zuführtransporteinrichtung eignet sich insbesondere für die oben beschriebene Anwendung, die aufgrund der Beaufschlagungseinrichtungen schwerer zugänglich ist als aus dem Stand der Technik bekannte Zuführtransporteinrichtungen. Es wird auch darauf hingewiesen, dass die hier beschriebene Zuführtransporteinrichtung auch für andere Anwendungen denkbar ist.

Die vorliegende Erfindung ist weiterhin auf ein Verfahren zum Erwärmen von Kunststoffvorformlingen gerichtet, wobei die Kunststoffvorformlinge mit einer Transporteinrichtung während ihrer Erwärmung entlang eines vorgegebenen Transportpfads transportiert und dabei von einer Vielzahl von Halteeinrichtungen dieser Transporteinrichtung gehalten werden und wobei die Kunststoffvorformlinge mit einer ersten Zuführtransporteinrichtung der Transporteinrichtung in einem Übergabebereich insbesondere direkt übergeben werden, wobei diese erste Zuführtransporteinrichtung einen bezüglich einer Drehachse drehbaren Träger aufweist mit einer Vielzahl von Halteeinrichtungen, welche die Kunststoffvorformlinge halten.

Erfindungsgemäß ist jeder dieser Halteeinrichtungen jeweils eine Beaufschlagungseinrichtung zugeordnet, welche die Kunststoffvorformlinge durch deren Mündungen mit einem fließfähigen Medium beaufschlagt, wobei diese Beaufschlagungseinrichtungen an einem um eine Drehachse drehbaren Träger angeordnet sind. Es wird daher auch verfahrensseitig vorgeschlagen, dass die Kunststoffvorformlinge mittels der Zuführtransporteinrichtung sowohl dem Ofen zugeführt werden als auch in diesem Schritt mit einem fließfähigen Medium und insbesondere einem gasförmigen oder aerosolartigen Medium beaufschlagt werden.

Bei einer weiteren bevorzugten Ausführungsform weist die hier beschriebene Vorrichtung eine Ionisationseinrichtung auf, welche Luft ionisiert.

Bei einem weiteren bevorzugten Verfahren werden die Beaufschlagungseinrichtungen wenigstens zeitweise relativ zu den diesen Beaufschlagungseinrichtungen zugeordneten Kunststoffvorformlingen in eine Richtung bewegt, welche eine Komponente in der radialen Richtung des drehbaren Trägers aufweist und welche bevorzugt genau in radialer Richtung verläuft.

Weitere Vorteile und Ausführungsformen ergeben sich aus den beigefügten Zeichnungen.

Darin zeigen:
- Fig. 1: Eine schematische Darstellung einer erfindungsgemäßen Anordnung zum Herstellen von Kunststoffbehältnissen;
- Fig. 2: eine Darstellung einer Ausführungsform einer Zuführtransporteinrichtung;
- Fig. 3: eine Darstellung einer Zuführtransporteinrichtung für eine erfindungsgemäßen Vorrichtung;
- Fig. 4: eine Detaildarstellung der in Fig. 3 gezeigten Zuführtransporteinrichtung;
- Fig. 5: eine Darstellung eines Teils der Zuführtransporteinrichtung mit pneumatisch lösbaren Befestigungseinrichtungen;
- Fig. 6a - 6c: drei Darstellungen der beschriebenen Befestigungseinrichtung; und
- Fig. 7: eine teilweise Draufsicht auf eine erfindungsgemäße Vorrichtung.

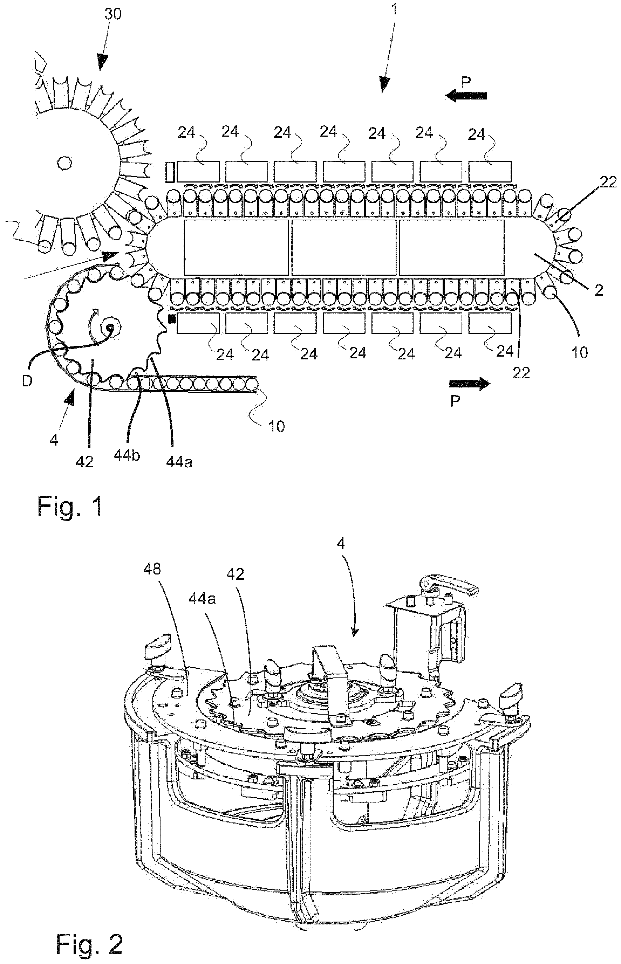

Figur 1 zeigt eine Erwärmungsvorrichtung zum Erwärmen von Kunststoffvorformlingen 10. Dabei bezieht sich das Bezugszeichen 2 in seiner Gesamtheit auf eine Transporteinrichtung, welche die Kunststoffvorformlinge entlang eines Transportpfads P und vorbei an stationär angeordneten Heizeinrichtungen 24 transportiert. Bei der in Figur 1 gezeigten Ausführungsform ist diese Transporteinrichtung eine umlaufende Kette, an der eine Vielzahl von Halteelementen 22 zum Halten der Kunststoffvorformlinge angeordnet ist. Dabei können diese Kunststoffvorformlinge auch, wie durch die kleinen Pfeile angedeutet, gedreht werden.

Das Bezugszeichen 4 kennzeichnet eine Zuführtransporteinrichtung 4, die hier als Eintaktstern ausgebildet ist. Man erkennt, dass die Kunststoffvorformlinge über eine Zuführschiene zugeführt werden und von der Zuführtransporteinrichtung 4 vereinzelt werden. Das Bezugszeichen 42 kennzeichnet einen bezüglich einer Drehachse D drehbaren Träger und die Bezugszeichen 44a und 44b zwei Halteeinrichtungen, die hier als Ausnehmungen ausgebildet sind, die wiederum am Umfang des drehbaren Trägers 42 angeordnet sind.

Das Bezugszeichen 30 kennzeichnet eine nachgeordnete Transporteinrichtung, mit der die nunmehr erwärmten Kunststoffvorformlinge an eine (nicht gezeigte) Vorrichtung zum Umformen von Kunststoffvorformlingen zu Kunststoffbehältnissen, wie etwa eine Blasformmaschine übergeben werden.

Figur 2 zeigt eine Ausgestaltung einer Zuführtransporteinrichtung. Dabei ist wieder der drehbare Träger dargestellt sowie eine Halteeinrichtung 44a. Das Bezugszeichen 48 kennzeichnet einen Führungsbogen, wobei die Kunststoffvorformlinge (nicht gezeigt) zwischen diesen Führungsbogen und den einzelnen Ausnehmungen 44a angeordnet und geführt werden. Dieser Führungsbogen 48 ist dabei an einem Träger mit einer Vielzahl von Befestigungseinrichtungen befestigt. Dabei ist dieser Führungsbogen wechselbar, um so eine Anpassung an unterschiedliche Kunststoffvorformlinge durchführen zu können. Auch der Träger 42 ist bevorzugt wechselbar.

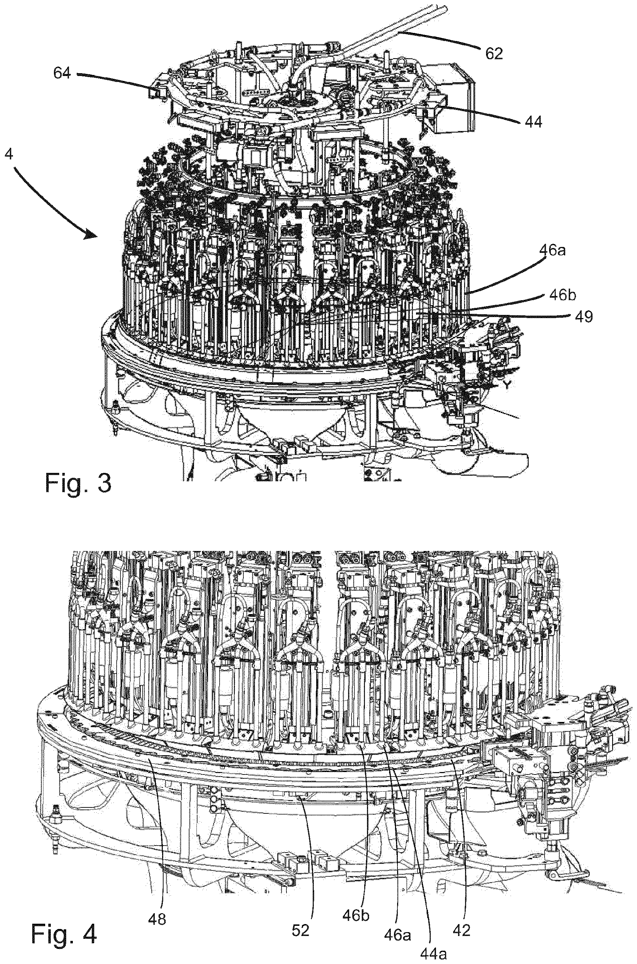

Figur 3 zeigt eine Darstellung einer erfindungsgemäßen Zuführtransporteinrichtung. Dabei ist eine Vielzahl von Beaufschlagungseinrichtungen 46a, 46b vorgesehen. Diese sind dabei an einen Träger 48 angeordnet und in einer Längsrichtung der (nicht gezeigten) Kunststoffvorformlinge, in Fig. 3 also in vertikaler Richtung bewegbar.

Das Bezugszeichen 62 kennzeichnet eine Zuführungsleitung, über welche beispielsweise ein unter Druck stehendes gasförmiges Medium zugeführt werden kann. Die Bezugszeichen 44 und 64 kennzeichnen dabei Ventilblöcke, mit denen dieses Medium auf die einzelnen Beaufschlagungseinrichtungen verteilt werden kann.

Figur 4 zeigt eine Detaildarstellung der in Figur 3 gezeigten Vorrichtung. Man erkennt hier wiederum den Träger 42 sowie auch den Führungsbogen 48.

Das Bezugszeichen 52 kennzeichnet eine Befestigungseinrichtung, um den Führungsbogen 48 an einem weiteren Träger zu befestigen. Die Bezugszeichen 46a und 46b kennzeichnen wiederum Beaufschlagungseinrichtungen, wobei hier jeweils eine Beaufschlagungseinrichtung einer Führungseinrichtung 44a zugeordnet ist. Bei der in Figur 4 gezeigten Ausführungsform sind jeweils drei Beaufschlagungseinrichtungen an einem gemeinsamen Träger befestigt und können auf diese Weise in der Längsrichtung der Kunststoffvorformlinge bewegt werden, um so in die (nicht gezeigten) Kunststoffvorformlinge eingeführt zu werden.

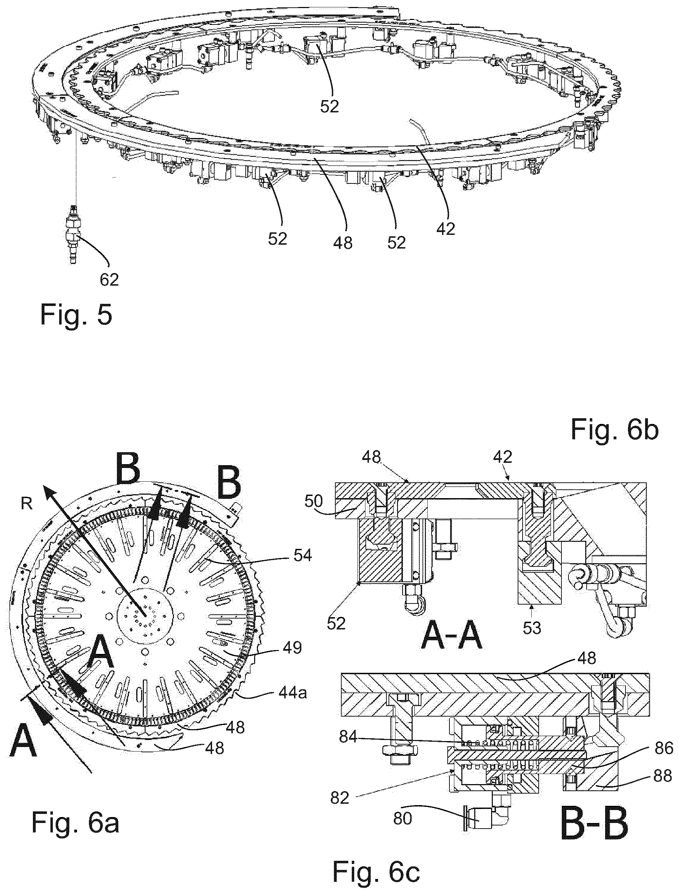

Figur 5 zeigt eine weitere Darstellung des Trägers 42 und auch des Führungsbogens 48. Die Bezugszeichen 52 kennzeichnen wieder Spanneinrichtungen, genauer genannt Pneumatikspanner. Diese werden durch eine zentrale Zuführeinrichtung 62 für Pneumatikluft versorgt und könnten auf diese Weise in eine gelöste Stellung überführt werden. In dieser Stellung kann der Führungsbogen 48, der hier, wie gezeigt, in zwei Teilen segmentiert ausgeführt ist, abgenommen werden. Während bei aktuellen Zuführtransporteinrichtungen ein Stern sowie auch der Außenbogen 48 manuell verschraubt sind, ist ein derartiger Aufbau für die komplizierte Ausgestaltung mit Beaufschlagungseinrichtungen eher nachteilhaft.

Aufgrund der Größe dieses Sterns und auch der schlechten Zugänglichkeit bei einem Garniturenwechsel ist eine Verschraubung hier nicht überall möglich bzw. vorteilhaft. Daher wird, wie oben erwähnt, vorgeschlagen, dass der Sägezahnstern bzw. der Träger sowie auch die Führungsgarnituren mit Pneumatikspannern 52 unter Federkraft fixiert werden. Zum Wechsel wird Druckluft, beispielsweise 10bar-Druckluft an die Spanneinrichtungen angeschlossen und so die Federklemmung entriegelt, sodass die Garnituren ohne Werkzeuge gewechselt werden können.

Figur 5 zeigt eine entsprechende Darstellung zur Veranschaulichung dieser Montage. Dabei sind die Schnellspanner 52 vorgesehen, welche die Außengarnitur bzw. den Außenbogen 48 an dessen Träger 50 halten. Entsprechend sind auch Pneumatikspanner vorgesehen, welche den Träger bzw. den Sägezahnstern 42 an einem Träger halten.

Die Figuren 6a bis 6c veranschaulichen diesen erfindungsgemäßen Spannmechanismus. Bei der in Figur 6A gezeigten Situation ist wiederum der Träger 42 teilweise erkennbar. Daneben ist auch der Träger 49 erkennbar, an dem die (nicht gezeigten) Beaufschlagungseinrichtungen angeordnet sind. Dabei sind im Einzelnen auch in radialer Richtung verlaufende Nuten 54 dargestellt, in den die Beaufschlagungseinrichtungen radial nach innen verschoben werden können, wie oben ausgeführt. Das Bezugszeichen R kennzeichnet eine radiale Richtung des Trägers 42.

Figur 6b zeigt eine Darstellung entlang der Linien A-A aus Figur 6a. Dabei ist wiederum der Träger 50 vorgesehen, an dem der Außenbogen 48 angeordnet ist. Daneben ist auch die Innengarnitur 42 bzw. der Träger mit den Halteeinrichtungen erkennbar. Die Bezugszeichen 52 und 53 kennzeichnen je eine Pneumatikspanneinrichtung für den äußeren Führungsbogen sowie eine Pneumatikspanneinrichtung für den Träger 42.

Figur 6c zeigt eine Darstellung entlang der Linien B-B aus Figur 6a. Dabei ist detaillierter eine dieser Pneumatikspanner 52 dargestellt. Man erkennt eine Federeinrichtung 84, welche einen Sperrriegel bzw. einen Vorsprung 86 hier nach rechts vorspannt, das heißt in die fixierte Stellung. Durch Beaufschlagung mit Druckluft über die Zuführleitung 80 wird der Kolben innerhalb des Kolbenraums 82 nach innen bewegt und so die Verriegelung gelöst. Das Bezugszeichen 88 kennzeichnet einen Träger.

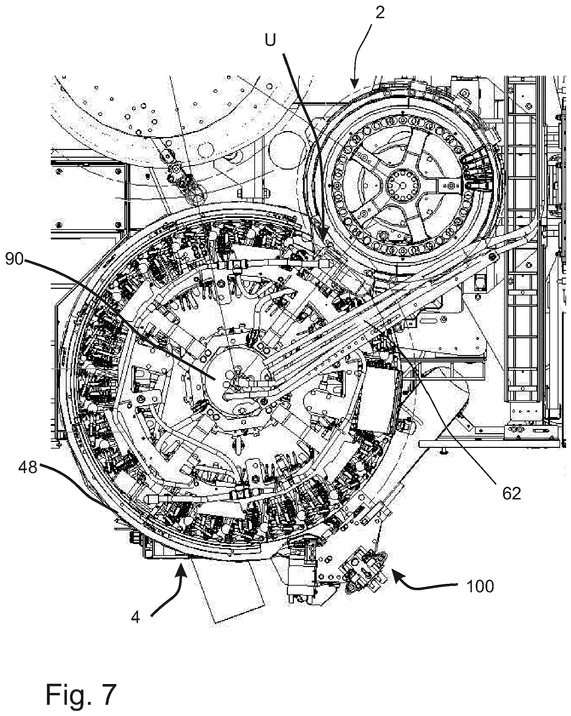

Figur 7 zeigt eine Draufsicht von oben auf die erfindungsgemäße Vorrichtung. Hier ist die Transporteinrichtung 2 bzw. ein Übernahmerad derselben erkennbar. Das Bezugszeichen 62 kennzeichnet eine Zuführeinrichtung, um der Zuführtransporteinrichtung 4 bzw. den einzelnen Beaufschlagungseinrichtungen ein fließfähiges und insbesondere gasförmiges Medium zuzuführen. Dabei bezeichnet das Bezugszeichen 9 schematisch einen Drehverteiler, der dieses gasförmige Medium auf das drehende Teil mit den Beaufschlagungseinrichtungen überträgt. Daneben ist auch hier wiederum der Außenbogen erkennbar, der zum Bilden der Halteeinrichtungen 44a und 44b dient.

Das Bezugszeichen 100 kennzeichnet eine Eintakteinrichtung, an der die Kunststoffvorformlinge in Reihe an die Zuführtransporteinrichtung 4 übergeben werden.

### Bezugszeichenliste

- 1: Vorrichtung
- 2: Transporteinrichtung
- 4: Zuführtransporteinrichtung
- 9: Drehverteiler
- 10: Kunststoffvorformlinge
- 22: Halteelemente
- 24: Heizeinrichtungen
- 30: nachgeordnete Transporteinrichtung
- 42: drehbarer Träger / Zuführeinrichtung / Pneumatikspanner / Sägezahnstern
- 44, 64: Ventilblöcke
- 44a: Ausnehmungen / Führungseinrichtung
- 44a, 44b: Halteeinrichtungen
- 46a, 46b: Beaufschlagungseinrichtungen
- 48: Führungsbogen / Träger / Außenbogen
- 49, 50: Träger
- 52, 53: Befestigungseinrichtung / Pneumatikspanneinrichtung
- 54: Nuten
- 62: Zuführungsleitung / Zuführeinrichtung
- 80: Zuführleitung
- 84: Federeinrichtung
- 86: Vorsprung
- 88: Träger
- 100: Eintakteinrichtung
- P: Transportpfad
- D: Drehachse
- L: Richtung
- AA und BB: Linien aus Fig. 6A

## Patentansprüche

1. Vorrichtung (1) zum Erwärmen von Kunststoffvorformlingen (10) mit einer Transporteinrichtung (2), welche die Kunststoffvorformlinge (10) während ihrer Erwärmung entlang eines vorgegebenen Transportpfads transportiert, wobei diese Transporteinrichtung (2) eine Vielzahl von Halteeinrichtungen zum Halten der Kunststoffvorformlinge während ihres Transports aufweist, mit einer ersten Zuführtransporteinrichtung (4), welche der Transporteinrichtung (2) in einem Übergabebereich die Kunststoffvorformlinge (10) direkt übergibt, wobei diese erste Zuführtransporteinrichtung (4) einen bezüglich einer Drehachse (D) drehbaren Träger (42) aufweist mit einer Vielzahl von Halteinrichtungen (44a, 44b), welche die Kunststoffvorformlinge (10) halten, **dadurch gekennzeichnet, dass**
jeder dieser Halteeinrichtungen (44a, 44b) jeweils eine Beaufschlagungseinrichtung (46a, 46b) zugeordnet ist, welche die Kunststoffvorformlinge durch deren Mündungen mit einem fließfähigen Medium beaufschlagen, wobei diese Beaufschlagungseinrichtungen (46a, 46b) an einem um eine Drehachse (D) drehbaren Träger (42) angeordnet sind.

2. Vorrichtung (1) nach Anspruch 1,
**dadurch gekennzeichnet, dass**
die Beaufschlagungseinrichtungen (46a, 46b) relativ zu den diesen Beaufschlagungseinrichtungen (46a, 46b) zugeordneten Kunststoffvorformlingen in einer Richtung bewegbar sind, welche eine Komponente in der radialen Richtung des drehbaren Trägers (48) aufweist.

3. Vorrichtung (1) nach Anspruch 2,
**dadurch gekennzeichnet, dass**
die Beaufschlagungseinrichtungen (46a, 46b) relativ zu den diesen Beaufschlagungseinrichtungen (46a, 46b) zugeordneten Kunststoffvorformlingen gegenüber dem Träger beweglich sind.

4. Vorrichtung (1) nach Anspruch 2 oder 3,
**dadurch gekennzeichnet, dass**
die Beaufschlagungseinrichtungen (46a, 46b) relativ zu den diesen Beaufschlagungseinrichtungen (46a, 46b) zugeordneten Kunststoffvorformlingen in dem Übergabebereich in Richtung der Drehachse bewegbar sind.

5. Vorrichtung (1) nach wenigstens einem der vorangegangenen Ansprüche 2 - 4, **dadurch gekennzeichnet, dass**
die Vorrichtung (1) eine Antriebseinrichtung aufweist, welche die Bewegungen der Beaufschlagungseinrichtungen gegenüber dem Träger bewirkt.

6. Vorrichtung (1) nach wenigstens einem der vorangegangenen Ansprüche 2 - 4, **dadurch gekennzeichnet, dass**
die Beaufschlagungseinrichtungen in einer Längsrichtung der Kunststoffvorformlinge (10) gegenüber den Kunststoffvorformlingen bewegbar sind, wobei bevorzugt die Vorrichtung wenigstens eine Antriebseinrichtung vorgesehen ist, um die Beaufschlagungseinrichtungen gegenüber den Kunststoffvorformlingen in deren Längsrichtungen zu bewegen.

7. Vorrichtung (1) nach wenigstens einem der vorangegangenen Ansprüche,
**dadurch gekennzeichnet, dass**
die Halteeinrichtungen (44a, 44b) der Zuführtransporteinrichtung (4) an einem Außenumfang des Trägers angeordnete Ausnehmungen (44a, 44b) sind.

8. Vorrichtung (1) nach wenigstens einem der vorangegangenen Ansprüche,
**dadurch gekennzeichnet, dass**
der Zuführtransporteinrichtung (4) in der Transportrichtung eine weitere Transporteinrichtung zum Transportieren der Kunststoffvorformlinge vorangeordnet ist, welche die Kunststoffvorformlinge an die Zuführtransporteinrichtung (4) übergibt und welche die Kunststoffvorformlinge in einer Reihe transportiert.

9. Verfahren zum Erwärmen von Kunststoffvorformlingen (10), wobei die Kunststoffvorformlinge (10) mit einer Transporteinrichtung (2) während ihrer Erwärmung entlang eines vorgegebenen Transportpfads transportiert und dabei von einer Vielzahl von Halteeinrichtungen dieser Transporteinrichtung (2) gehalten werden und wobei die Kunststoffvorformlinge mit einer ersten Zuführtransporteinrichtung (4) der Transporteinrichtung (2) in einem Übergabebereich die Kunststoffvorformlinge (10) insbesondere direkt übergeben werden, wobei diese erste Zuführtransporteinrichtung (4) einen bezüglich einer Drehachse (D) drehbaren Träger (42) aufweist mit einer Vielzahl von Halteinrichtungen (44a, 44b), welche die Kunststoffvorformlinge halten, **dadurch gekennzeichnet, dass**
jeder dieser Halteeinrichtungen (44a, 44b) jeweils eine Beaufschlagungseinrichtung (46a, 46b) zugeordnet ist, welche die Kunststoffvorformlinge durch deren Mündungen mit einem fließfähigen Medium beaufschlägt, wobei diese Beaufschlagungseinrichtungen (46a, 46b) an einem um eine Drehachse (D) drehbaren Träger (48) angeordnet sind.

10. Verfahren nach dem vorangegangenen Anspruch,
**dadurch gekennzeichnet, dass**
die Beaufschlagungseinrichtungen wenigstens zeitweise relativ zu den diesen Beaufschlagungseinrichtungen (46a, 46b) zugeordneten Kunststoffvorformlingen in einer Richtung bewegt werden, welche eine Komponente in der radialen Richtung des drehbaren Trägers (48) aufweist.

## Claims

1. Apparatus (1) for heating plastic preforms (10) with a transport device (2) which transports the plastic preforms (10) during their heating along a predetermined transport path, wherein this transport device (2) has a plurality of holding devices for holding the plastic preforms during their transport, with a first feed transport device (4) which directly transfers the plastic preforms (10) to the transport device (2) in a transfer region, wherein this first feed transport device (4) having a carrier (42) which can be rotated with respect to an axis of rotation (D) and has a plurality of holding devices (44a, 44b) which hold the plastic preforms (10), **characterised in that**
each of these holding devices (44a, 44b) is in each case assigned an application device (46a, 46b) which acts upon the plastic preforms through their mouths with a flowable medium, wherein these application devices (46a, 46b) being arranged on a carrier (42) which can be rotated about an axis of rotation (D).

2. Apparatus (1) according to claim 1,
**characterised in that**
the application devices (46a, 46b) are movable relative to the plastic preforms associated with these application devices (46a, 46b) in a direction which has a component in the radial direction of the rotatable carrier (48).

3. Apparatus (1) according to claim 2,
**characterised in that**
the application devices (46a, 46b) are movable relative to the carrier with respect to the plastic preforms associated with these application devices (46a, 46b).

4. Apparatus (1) according to claim 2 or 3,
**characterised in that**
the application devices (46a, 46b) are movable relative to the plastic preforms associated with these application devices (46a, 46b) in the transfer region in the direction of the axis of rotation.

5. Apparatus (1) according to at least one of the preceding claims 2-4, **characterised in that**
the apparatus (1) has a drive device which effects the movements of the application devices relative to the carrier.

6. Apparatus (1) according to at least one of the preceding claims 2-4, **characterised in that**
the application devices are movable in a longitudinal direction of the plastic preforms (10) relative to the plastic preforms, wherein preferably the apparatus being provided with at least one drive device for moving the application devices relative to the plastic preforms in the longitudinal directions thereof.

7. Apparatus (1) according to at least one of the preceding claims, **characterised in that**
the holding devices (44a, 44b) of the feed transport device (4) are recesses (44a, 44b) arranged on an outer circumference of the carrier.

8. Apparatus (1) according to at least one of the preceding claims, **characterised in that**
a further transport device for transporting the plastic preforms is arranged upstream of the feed transport device (4) in the transport direction, which transport device transfers the plastic preforms to the feed transport device (4) and which transports the plastic preforms in a row.

9. Method for heating plastic preforms (10), wherein the plastic preforms (10) are transported along a predetermined transport path by a transport device (2) during their heating and are held by a plurality of holding devices of this transport device (2) and wherein the plastic preforms are transferred, in particular directly, by a first feed transport device (4) of the transport device (2) in a transfer region, wherein this first feed transport device (4) having a carrier (42) which can be rotated with respect to an axis of rotation (D) and has a plurality of holding devices (44a, 44b) which hold the plastic preforms,
**characterised in that**
each of these holding devices (44a, 44b) is in each case assigned an application device (46a, 46b) which acts upon the plastic preforms through their mouths with a flowable medium, wherein these application devices (46a, 46b) being arranged on a carrier (48) which can be rotated about an axis of rotation (D).

10. Method according to the preceding claim,
**characterised in that**
the application devices are moved at least temporarily relative to the plastic preforms associated with these application devices (46a, 46b) in a direction which has a component in the radial direction of the rotatable carrier (48).

## Revendications

1. Dispositif (1) de chauffage de préformes en matière plastique (10) avec un dispositif de transport (2) qui transporte les préformes en matière plastique (10) pendant leur chauffage le long d'une voie de transport prédéfinie, dans lequel ce dispositif de transport (2) présente une pluralité de dispositifs de retenue pour la retenue des préformes en matière plastique pendant leur transport, avec un premier dispositif de transport d'alimentation (4) qui remet directement au dispositif de transport (2) dans une zone de remise les préformes en matière plastique (10), dans lequel ce premier dispositif de transport d'alimentation (4) présente un support (42) rotatif par rapport à un axe de rotation (D) avec une pluralité de dispositifs de retenue (44a, 44b) qui retiennent les préformes en matière plastique (10),
**caractérisé en ce que**
à chacun de ces dispositifs de retenue (44a, 44b) est associé respectivement un dispositif d'alimentation (46a, 46b) qui alimente les préformes en matière plastique par leurs embouchures en un fluide coulant, dans lequel ces dispositifs d'alimentation (46a, 46b) sont agencés au niveau d'un support (42) rotatif autour d'un axe de rotation (D).

2. Dispositif (1) selon la revendication 1,
**caractérisé en ce que**
les dispositifs d'alimentation (46a, 46b) sont mobiles par rapport à ces préformes en matière plastique associées à ces dispositifs d'alimentation (46a, 46b) dans un sens qui présente un composant dans le sens radial du support (48) rotatif.

3. Dispositif (1) selon la revendication 2,
**caractérisé en ce que**
les dispositifs d'alimentation (46a, 46b) sont mobiles par rapport aux préformes en matière plastique associées à ces dispositifs d'alimentation (46a, 46b) par rapport au support.

4. Dispositif (1) selon la revendication 2 ou 3,
**caractérisé en ce que**
les dispositifs d'alimentation (46a, 46b) sont mobiles par rapport aux préformes en matière plastique associées à ces dispositifs d'alimentation (46a, 46b) dans la zone de remise dans le sens de l'axe de rotation.

5. Dispositif (1) selon au moins l'une des revendications précédentes 2 à 4, **caractérisé en ce que**
le dispositif (1) présente un dispositif d'entraînement qui provoque les mouvements des dispositifs d'alimentation par rapport au support.

6. Dispositif (1) selon au moins l'une des revendications précédentes 2 à 4, **caractérisé en ce que**
les dispositifs d'alimentation sont mobiles dans un sens longitudinal des préformes en matière plastique (10) par rapport aux préformes en matière plastique, dans lequel de préférence, le dispositif est prévu au moins un dispositif d'entraînement afin de déplacer les dispositifs d'alimentation par rapport aux préformes en matière plastique dans leurs sens longitudinaux.

7. Dispositif (1) selon au moins l'une des revendications précédentes, **caractérisé en ce que**
les dispositifs de retenue (44a, 44b) du dispositif de transport d'alimentation (4) sont des évidements (44a, 44b) agencés au niveau d'une périphérie extérieure du support.

8. Dispositif (1) selon au moins l'une des revendications précédentes, **caractérisé en ce que**
en amont du dispositif de transport d'alimentation (4) est agencé dans le sens de transport un autre dispositif de transport pour le transport des préformes en matière plastique qui remet les préformes en matière plastique au dispositif de transport d'alimentation (4) et qui transporte les préformes en matière plastique dans une rangée.

9. Procédé de chauffage de préformes en matière plastique (10), dans lequel les préformes en matière plastique (10) sont transportées avec un dispositif de transport (2) pendant leur chauffage le long d'une voie de transport prédéfinie et sont retenues par une pluralité de dispositifs de retenue de ce dispositif de transport (2) et dans lequel les préformes en matière plastique sont remises en particulier directement avec un premier dispositif de transport d'alimentation (4) du dispositif de transport (2) dans une zone de remise, dans lequel ce premier dispositif de transport d'alimentation (4) présente un support (42) rotatif par rapport à un axe de rotation (D) avec une pluralité de dispositifs de retenue (44a, 44b) qui retiennent les préformes en matière plastique, **caractérisé en ce que**
à chacun de ces dispositifs de retenue (44a, 44b) est associé respectivement un dispositif d'alimentation (46a, 46b) qui alimente les préformes en matière plastique par leurs embouchures en un fluide coulant, dans lequel ces dispositifs d'alimentation (46a ,46b) sont agencés au niveau d'un support (48) rotatif autour d'un axe de rotation (D).

10. Procédé selon la revendication précédente,
**caractérisé en ce que**
les dispositifs d'alimentation sont déplacés au moins temporairement par rapport aux préformes en matière plastique associées à ces dispositifs d'alimentation (46a, 46b) dans un sens qui présente un composant dans le sens radial du support (48) rotatif.
